# EUROPEAN PATENT SPECIFICATION

(11) **EP 1 598 724 B1**
(45) Date of publication and mention of the grant of the patent: **01.08.2007**
(21) Application number: 05010770.5
(22) Date of filing: 18.05.2005
(51) Int. Cl.: G05G 5/03, G05G 9/04, B60H 1/00

(54) **Haptic feedback input device**
Eingabegerät mit haptischer Rückkopplung
Dispositif d'entrée informatique à retour de force haptique

(30) Priority: 19.05.2004 JP 2004149305
(43) Date of publication of application: 23.11.2005
(73) Proprietor: ALPS ELECTRIC CO., LTD., Tokyo 145-8501 (JP)
(72) Inventor: Ushimaru, Hiroshi, Ota-ku, Tokyo 145-8501 (JP); Ogasawara, Satoru, Ota-ku, Tokyo 145-8501 (JP)
(74) Representative: Klunker . Schmitt-Nilson . Hirsch

(56) References cited:
- EP-A- 0 565 143
- EP-A- 1 205 956
- DE-A1- 10 243 642
- US-A1- 2002 057 152
- US-A1- 2004 032 395

## Description

### BACKGROUND OF THE INVENTION

### 1. Field of the Invention

The present invention relates to a haptic feedback input device that presents an operator with a haptic feedback according to the rotating operation of an operating part by applying a torque to the operating part according to the rotational angle of the operating part.

### 2. Description of the Related Art

A haptic feedback input device in the related art includes an operating part that is rotatingly operated; a power supply unit that supplies power generated by a prime mover to the operating part; a rotational angle detecting unit that detects the rotational angle of the operating part; and a control unit that controls the prime mover to apply a predetermined power to the operating part according to the rotational angle.

The power supply unit includes a motor serving as the prime mover; and a planetary gear mechanism serving as a power transmission mechanism that converts power into a torque between the motor and the operating part. The rotational angle detecting unit consists of a rotary encoder that detects the rotational angle of an output shaft of the motor and outputs a rotational angle signal corresponding to the rotational angle. The control unit computes a target value for the motor corresponding to the rotational angle indicated by the rotational angle signal and controls the motor according to the target value.

In the haptic feedback input device of the related art constructed as above, the control unit controls the power supply unit based on the rotational angle of the operating part, and thus the power supply unit supplies a predetermined torque to the operating part. As a result, the operating part presents the operator with a haptic feedback such as a resistance sense or a clicking sense etc. Japanese Unexamined Patent Application Publication No. 2003-50639 is an example of the related art.

In the haptic feedback input device, the operating quality can be improved by controlling a resistance force applied by the power supply unit to the operating part according to the rotational speed of the operating part, that is, by changing the resistance sense presented to the operator by the operating part according to the rotational speed of the operating part. Meanwhile, the rotational speed is a vector including a direction.

However, in the haptic feedback input device of the related art, the control of a resistance force applied to the operating part is delayed due to the followings (1) to (5).
(1) The transmission time of rotation from the operating part to the rotational angle detecting unit
(2) The response time of the rotational angle detecting unit
(3) The calculation time of the control unit
(4) The response time of the prime mover
(5) The transmission time of rotation from the prime mover to the operating part

Therefore, while the control of resistance force of the power supply unit is delayed, only the structural resistance force such as friction between members is applied to the operating part, and the resistance sense presented by the operating part to the operator does not reach the proper resistance sense that can improve the operating quality. Especially, when the rotational speed of the operating part changes suddenly, for example, when the operating part begins to rotate suddenly or when the rotating direction of the operating part reverses suddenly or when the rotational speed of the operating part increases suddenly, the delay of control of the resistance force affects the resistance sense substantially.

### SUMMARY OF THE INVENTION

The present invention has been made to solve the above problems. The advantage of the invention is that it provides a haptic feedback input device in which the effect of resistance force control delay on the resistance sense of an operating part right after a change in rotational speed can be diminished.

In order to achieve the above-described advantage, an aspect of the invention is constructed as follows (1) to (4).
(1) An aspect of the invention is a haptic feedback input device including an operating part that is rotatingly operated; a power supply unit that can supply power generated by a prime mover to the operating part; a rotational angle detecting unit that detects the rotational angle of the operating part; a control unit that controls the prime mover to apply a predetermined torque to the operating part according to the rotational angle; a resistance control unit that controls the prime mover to apply a predetermined resistance force to the operating part according to the rotational speed; a movable part and a sliding contact part that slide on each other with the rotation of the operating part; and a viscous substance that is filled between the movable part and the sliding contact part and generates a viscous resistance between the movable part and the sliding contact part.

In an aspect of the invention constructed as above, when the movable part slides on the sliding contact part with the rotation of the operating part, the viscous substance generates a viscous resistance between the movable part and the sliding contact part, and thus a resistance force is applied to the operating part. The resistance force results from the viscosity; therefore it increases as the rotational speed of the movable part, that is, the rotational speed of the operating part increases. That is, the resistance force applied to the operating part increases as the rotational speed of the operating part changes instantaneously, for example, when the operating part begins to rotate suddenly, when the rotating operation of the operating part reverses suddenly, or when the rotational speed of the operating part increases suddenly. Therefore while the control of the resistance force applied to the operating part is delayed, the resistance force corresponding to a change in the rotational speed can be applied to the operating part. As a result, the effect of the resistance force control delay on the resistance sense of the operating part right after the change in the rotational speed can be diminished.
(2) In the haptic feedback input device according to (1), it is preferable that the movable part have a cylindrical portion disposed concentrically with the center of rotation of the operating part and the sliding contact part have a cylindrical portion disposed concentrically with the center of rotation of the operating part to come into sliding contact with the cylindrical portion of the movable part.

In the aspect of the invention constructed as above, the circumferential wall of the cylindrical portion that is farthest from the center of rotation of the movable part can be made the portion of the movable part which slides on the sliding contact part. That is, when the movable part rotates with the operating part, the circumferential wall of the cylindrical portion that has the fastest moving speed among the portions forming the movable part can be made the portion of movable part which slides on the sliding contact part. Therefore, a viscous resistance can be generated effectively.
(3) In the haptic feedback input device according to (1), it is preferable that an O-ring be provided between the movable part and the sliding contact part.

In the aspect of the invention constructed as above, the O-ring can stop the viscous substance from moving in an inappropriate direction and can apply a resistance force to the movable part.
(4) In the haptic feedback input device according to (1), it is preferable that the power supply unit have a power transmission mechanism disposed between the prime mover and the operating part to transmit the power and the movable part be disposed between the operating part and the power transmission mechanism.

In the aspect of the invention constructed as above, the power outputted by the prime mover is increased via the power transmission mechanism and transmitted to the operating part. Therefore, a small prime mover may be mounted on the power supply unit because the prime mover is not required to output a great power. In addition, since the movable part and the sliding contact part are provided between the operating part and the power transmission mechanism, the backlash of the operating part due to the interposition of the power transmission mechanism can be suppressed by the viscous substance. Therefore, the operating quality can be prevented from being degraded due to the interposition of the power transmission mechanism.

### BRIEF DESCRIPTION OF THE DRAWINGS

FIG. 1 is a front view of an air conditioning setting apparatus including a haptic feedback force input device according to an embodiment of the present invention;
FIG. 2 is an exploded perspective view of the air conditioning setting apparatus shown in FIG. 1;
FIG. 3 is a cross-sectional view taken along a line III-III in FIG. 1;
FIG. 4 is a cross-sectional view taken along a line IV-IV in FIG. 1;
FIG. 5 is a cross-sectional view taken along a line V-V in FIG. 4; and
FIG. 6 is a block diagram illustrating the systematic structure of the air conditioning setting apparatus shown in FIG. 1.

### DESCRIPTION OF THE PREFERRED EMBODIMENT

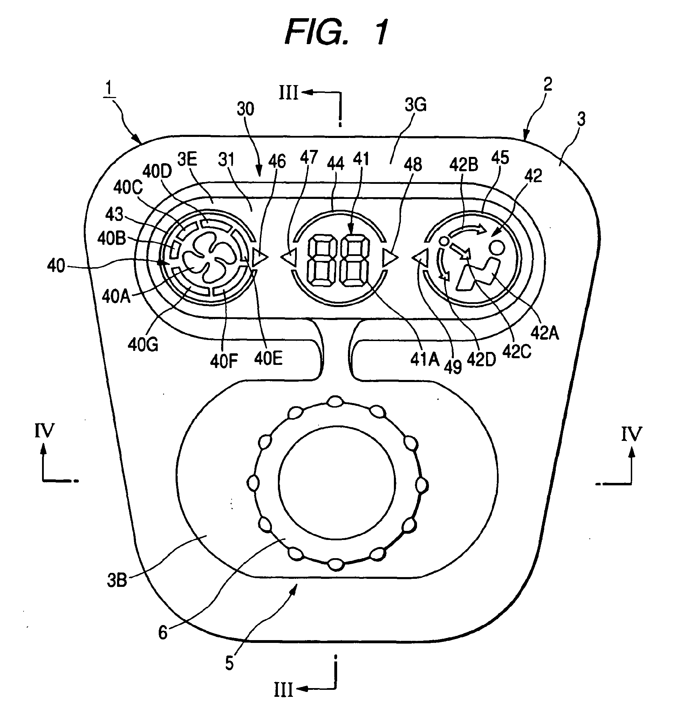

Hereinafter, a haptic feedback input device according to an embodiment of the present invention will be described with reference to FIGS. 1 to 6.

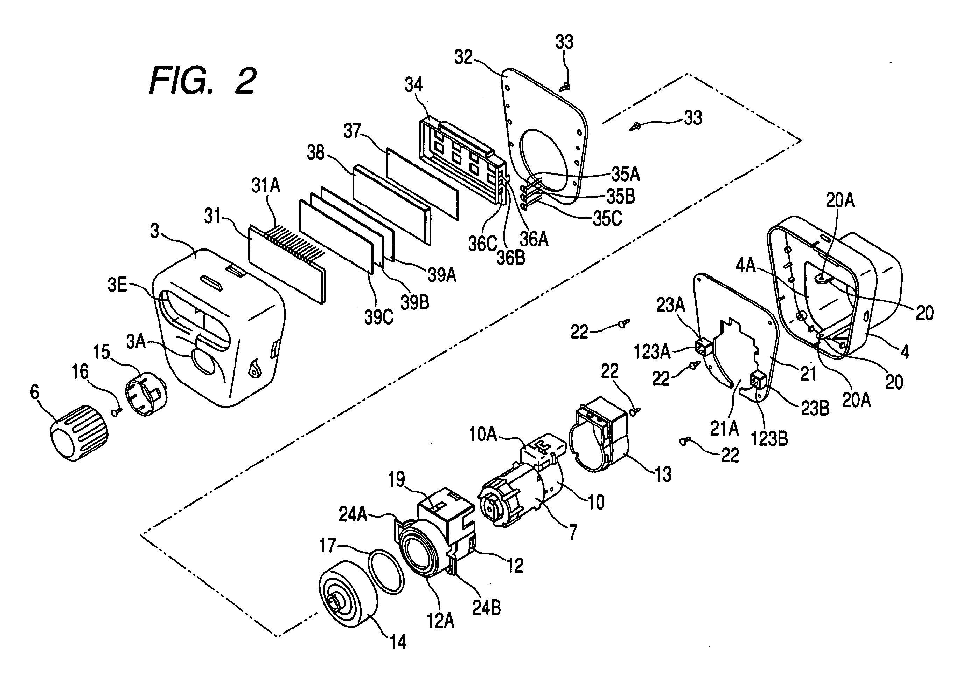

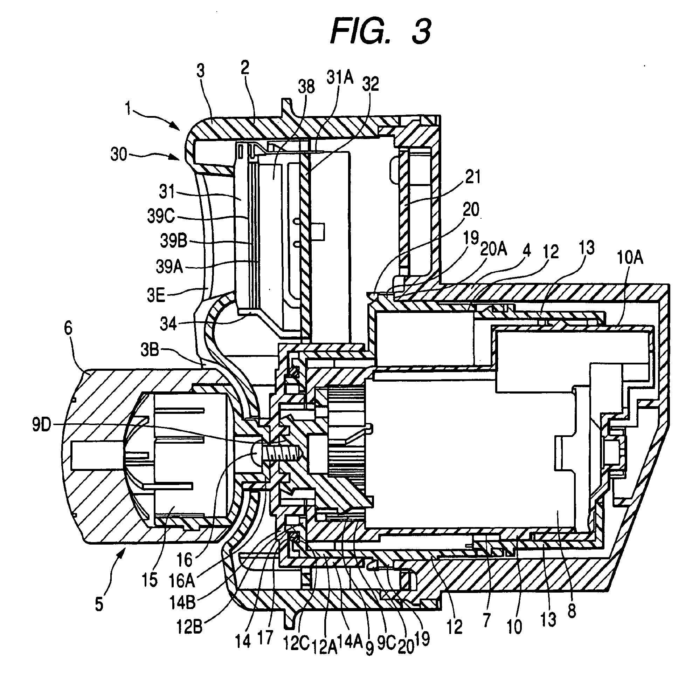

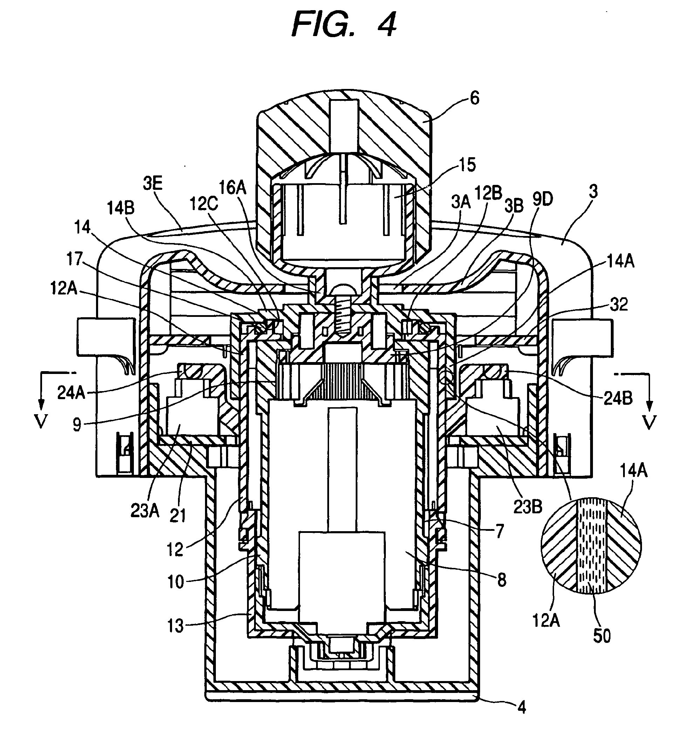

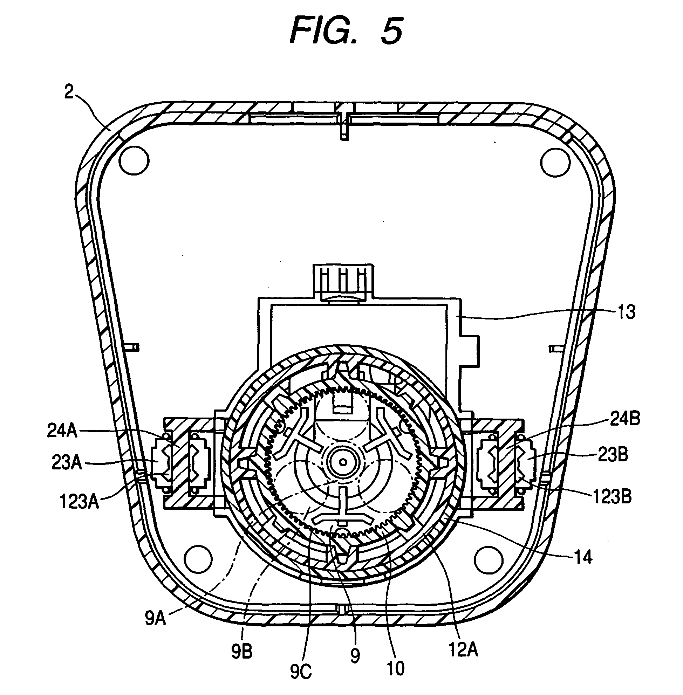

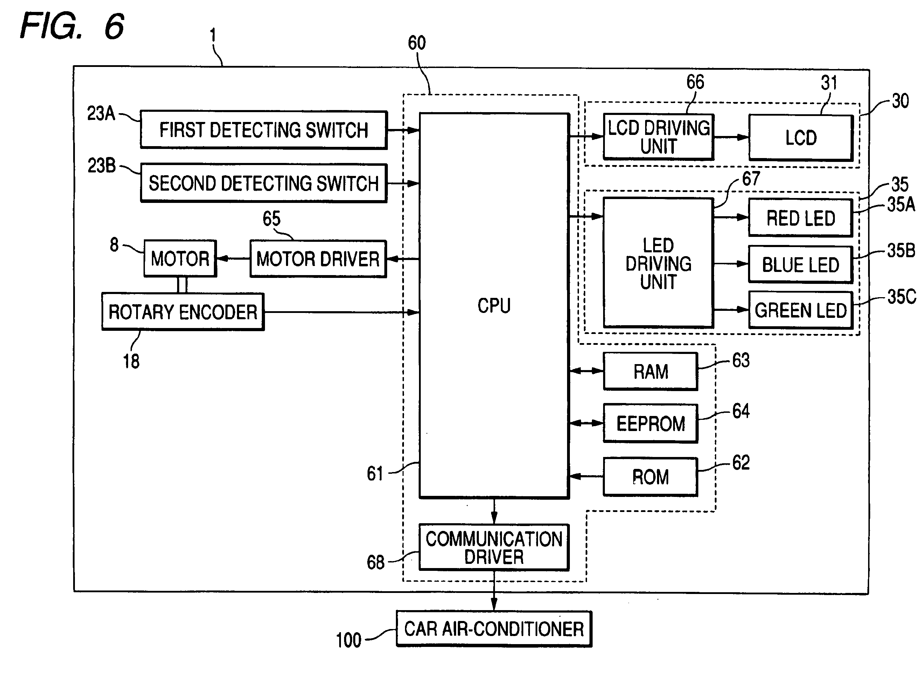

FIG. 1 is a front view of an air conditioning setting apparatus including the haptic feedback input device according to the embodiment of the present invention, FIG. 2 is an exploded perspective view of the air conditioning setting apparatus shown in FIG. 1, FIG. 3 is a cross-sectional view taken along the line III-III in FIG. 1, FIG. 4 is a cross-sectional view taken along the line IV-IV in FIG. 1, FIG. 5 is a cross-sectional view taken along the line V-V in FIG. 4, and FIG. 6 is a block diagram illustrating the systematic structure of the air conditioning setting apparatus shown in FIG. 1.

### <1> Structure of Present Embodiment

The present embodiment is a haptic feedback input device 5 disposed in a vehicle instrument panel (not shown) and included in an air conditioning setting apparatus 1 for operating a car air conditioner 100 (see FIG. 6).

The air conditioning setting apparatus 1 includes a display device 30 having a display surface, that is, LCD 31 for displaying the setting items of the car air conditioner 100 such as air volume, temperature and air outlet, and how the air volume (hereinafter referred to as set air volume), how the temperature is set (hereinafter referred to as set temperature) and how the air outlet is set (hereinafter referred to as set outlet); and a lighting device 35 for lighting the LCD 31.

Also, the air conditioning setting apparatus 1 includes a control unit 60 for controlling the haptic feedback input device 5, the display device 30 and the lighting device 35 in response to the signals outputted by the haptic feedback input device 5.

The haptic feedback input device 5 according to the embodiment is constructed to output switching signals for instructing the switching to a state in which the set air volume, the set temperature and the set air outlet can be selectively changed and to output setting changing signals for instructing the change of the set state.

The haptic feedback input device 5, the display device 30 and the lighting device 35 are stored in a housing 2. The housing 2 is constructed by coupling a front case 3 and a rear case 4 as shown in FIG. 2.

### <1.1> Structure of Haptic Feedback Input Device

The details of the structure of the haptic feedback input device 5 will be described with reference to FIGS. 2 to 5.

The haptic feedback input device 5 includes the operating part 6 that is disposed at the front of the front case 3 and that is rotatingly operated by hand, is operated to be moved in a predetermined direction, and is operated to be tilted in the right-and-left direction. A horizontally long, recessed portion 3B is provided on a plate portion of the front case 3 located around the operating part 6.

The housing 2 is provided with a motor 8 that is a prime mover; and a power supply unit 7 having a power transmission mechanism, that is, a planetary gear mechanism 9 provided between the motor 8 and the operating part 6 to increase a torque outputted from an output shaft of the motor 8 and transmit the increase torque to the operating part 6. The motor 8 and the planetary gear mechanism 9 are integrally formed and covered with a cover 10.

The planetary gear mechanism 9 includes a sun gear 9A fixed to the output shaft of the motor 8 to rotate with the output shaft, three planetary gears 9B revolving around the sun gear 9A, a ring gear 9C formed on the inner wall of the cover 10 to mesh with the planetary gears 9B at the inner circumference of the cover 10; and carriers 9D provided with a rotary shaft of each planetary gear 9B to rotate with the revolution of the planetary gears 9B.

The power supply unit 7 is covered with a front cover 12 mounted on a front portion of the power supply unit 7 and a rear cover 13 mounted on a rear portion of the power supply unit 7 and coupled with the front cover 12.

The front cover 12 has a cylindrical portion 12A. The cylindrical portion 12A has its rotation disposed concentrically with the center of rotation of the motor 8. Also, the output shaft of the carrier 9D protrudes toward the inner circumference of the cylindrical portion 12A.

An operating part holder 15 is fixed to the operating part 6. The movable part 14 and the carrier 9D are fixed to the operating part holder 15 with a screw etc. That is, the movable part 14 rotating with the rotation of the operating part 6 is provided between the power supply unit 7 and the operating part 6.

The movable part 14 has a cylindrical portion 14A disposed concentrically with the center of rotation of the operating part 6. An inner circumferential wall of the cylindrical portion 14A comes into sliding contact with an outer circumferential wall of the cylindrical portion 12A of the front cover 12. That is, the front cover 12 is provided between the power supply unit 7 and the operating part 6 to serve as a sliding contact part which comes into sliding contact with the movable part 14.

As shown in FIG. 4, a viscous material, for example, grease 50 is filled along the whole circumference between the cylindrical portion 12A of the front cover 12 and the cylindrical portion 14A of the movable part 14 to generate a viscous resistance between the cylindrical portions 12A and 14A.

A front end 12B of the front cover 12 is formed with an annular groove 12C defined between two annular protrusions, into which an O-ring 17 is fitted. That is, the O-ring 17 stops the grease 50 from moving toward the planetary gear mechanism 9 located between the front end 14B of the movable part 14 and the front end 12B of the front cover 12.

In the front case 3, a coupling part 16A between the operating part holder 15 and the movable part 14 is disposed, and a horizontally long hole 3A is formed to allow the movement the coupling part 16A accompanying the tilting of the operating part 6.

The operating part 6 is provided with a supporting part that supports the operating part 6 to be tiltable in the right-and-left direction. The supporting part tiltably supports a coupling body of the operating part 6 and the power supply unit 7 and is composed of a pair of tilting shafts 19 provided in upper and lower portions of the front cover 12; and a pair of tongue pieces 20 having shaft holes 20A into which the tilting shafts 19 are rotatably inserted.

In the rear case 4, a rear portion of the coupling body located behind the tilting shafts 19 is disposed, and a receiving part 4A is formed to allowing the tilting of the coupling body.

In addition, a first circuit board 21 is fixed to the rear case 4 with screws 22. In the first circuit board 21, the rear portion of the coupling body located behind the tilting shafts 19 is disposed, and an opening 21A is formed to allow the tilting of the coupling body.

First and second detecting switches 23A and 23B are provided on the right and left sides of the front surface of the first circuit board 21.

The first detecting switch 23A includes a driving member 123A provided to be reciprocable back and forth, a movable contact (not shown) and a fixed contact (not shown) which contact with and separated from each other with the reciprocating motion of the driving member 123A, and an elastic member (not shown) for returning the driving member 123A. The second detecting switch 23B includes a driving member 123B provided to be reciprocable back and forth, a movable contact (not shown) and a fixed contact (not shown) which contact with and separated from each other with the reciprocating motion of the driving member 123B, and an elastic member (not shown) for returning the driving member 123B.

A first operating piece 24A protrudes from the left side of the front cover 12 to operate the driving member 123A of the first detecting switch 23A with the left tilting of the coupling body, and a second operating piece 24B protrudes from the right side of the front cover 12 to operate the driving member 123B of the second detecting switch 23B.

That is, when the operating part 6 is operated to tilt to the left, the operating piece 24A operates the first detecting switch 23A to turn it on, and a left tilting signal indicating that the operating part 6 is tilted to the left is outputted as a switching signal. Similarly, when the operating part 6 is tilted to the right, the operating piece 24B operates the second detecting switch 23B to turn it on, and a right tilting signal indicating that the operating part 6 is tilted to the right is outputted as a switching signal.

A rotary encoder 18 (see FIG. 6) is attached to the power supply unit 7. The rotary encoder 18 detects the rotational angle of the output shaft of the motor 8, that is, the rotational angle of the operating part 6, and outputs rotational angle signals corresponding to the detected rotational angle as the setting changing signals. The rotary encoder 18, although not shown, includes a code plate that rotates with the output shaft of the motor 8, and a photosensor that detects the rotational angle of the code plate and outputs signals corresponding to the rotational angle. The photosensor is received in the box-shaped part 10A formed in the cover 10.

### <1.2> Structure of Display Device 30

Hereinafter, the display device 30 will be described in detail with reference to FIGS. 1 and 2.

The display device 30 includes the LCD 31, a second circuit board 32 which is connected to a terminal 31A of the LCD 31, and an LCD holder 34 in which the LCD 31 is fitted and which is fixed to the second circuit board 32. In the front case 3, a window 3E is formed to expose the surface of the LCD 31.

The second circuit board 32 is fastened to the front case 3 with screws 33. In the second circuit board 32, a LCD driving unit 66 (see FIG. 6) is provided to drive the LCD 31. The LCD driving unit 66 drives the LCD 31 according to the control signals from the control unit 60.

The control unit 60 outputs the control signals to the LCD driving unit 66 according to the tilting direction detected by the first and second detecting switches 23A and 23B and the rotational angle detected by the rotary encoder 18.

A portion of the LCD 31 exposed through the window 3E of the front case 3 is provided with an air volume display area 40 for displaying the set air volume, a temperature display area 41 for displaying the set temperature, and an air outlet display area 42 for displaying the set air outlet.

The air volume display area 41 is provided with a fan-shaped segment 40A and six circular-arc segments 40B to 40G that surround the fan-shaped segment 40A, and these segments can emit light. That is, the light-emission of the fan-shaped segment 40A indicates that the segment is in the air volume display area 40, and the level of the set air volume is displayed in six steps such as the light-emission of the circular-arc segment 40B only, the light-emission of the circular-arc segments 40B and 40C, the light-emission of the circular-arc segments 40B to 40D, the light-emission of the circular-arc segments 40B to 40E, the light-emission of the circular-arc segments 40B to 40F, and the light-emission of the circular-arc segments 40B to 40G.

The temperature display area 41 is provided with a number forming unit 41A which can form two-digit numbers with the light-emission of a plurality of segments. That is, the set temperature is displayed by the numbers formed by the number forming unit 41A. The set temperature is displayed by 1°C in a range of 16°C to 30°C according to the setting of the control unit 60.

The air outlet display area 42 is provided with a human-shaped segment 42A, an arrow-shaped segment 42B extending toward the top of the human-shaped segment 42A, an arrow-shaped segment 42C extending toward the middle of the human-shaped segment 42A, and an arrow-shaped segment 42C extending toward the lower end of the human-shaped segment 42A, and these segments can emit light. That is, a state in which a DEF air outlet is set to send air toward the front window is displayed with the light-emission of the arrow-shaped segment 42B, and a state in which a VENT air outlet is set to send air toward the face or the body of a driver is displayed with the light-emission of the arrow-shaped segment 42C, and a state in which a FLOOR air outlet is set to send air toward the feet of the driver is displayed with the light-emission of the arrow-shaped segment 42D.

Further, ring-shaped segments 43 to 45 capable of emitting light are provided outside the air volume display area 40, the temperature display area 41 and the air outlet display area 42, respectively. That is, among three setting items, the ring-shaped segment 43 emits light when the air volume is selected, and the ring-shaped segment 44 emits light when the temperature is selected, and the ring-shaped segment 45 emits light when the air outlets are selected.

In addition, a triangular segment 46 with one apex facing right is provided at the right of the ring-shaped segment 43 to emit light. Also, a triangular segment 47 with one apex facing left is provided at the left of the ring-shaped segment 44 to emit light, and a triangular segment 48 with one apex facing right is provided at the right of the ring-shaped segment 44 to emit light. Also, a triangular segment 49 with one apex facing left is provided at the left of the ring-shaped segment 45.

### <1.3> Structure of Lighting Device 35

The lighting device 35 includes a red LED 35A serving as a light-emitting unit that emits a red light, a blue LED 35B serving as a light-emitting unit that emits a blue light, and a green LED 35C serving as a light-emitting unit that emits a green light. The respective LED 35A to 35C are disposed at corresponding LED attaching holes 36A to 36C formed in one lateral end, for example, the right lateral end of the LCD holder 34. The LED 35A to 35C are electrically connected to the second circuit board 32 via lead wires. The LED driving unit 67 for making the LEDs 35A to 35C emit light is provided in the second circuit board 32. The LED driving unit 67 performs driving according to the control signals from the control unit 60.

A reflecting plate 37 is attached on the entire bottom surface of the LCD holder 34 to reflect light. Between the reflecting plate 37 and the LCD 31, a light guide plate 38 is disposed to guide the light emitted from the LEDs 35A to 35C and the light reflected by the reflecting plate 37 to the rear surface of the LCD 31, and three pieces of diffusing sheets 39A to 39C are disposed to diffuse the light guided by the light guide plate 38 uniformly onto the rear surface of the LCD 31.

### <1.4> Structure of Control Unit 60

The structure of the control unit 60 will be described in detail with reference to FIG. 6.

The control unit 60 provided in the first circuit board 21 includes CPU 61, ROM 62, RAM 63, EEPROM 64 and a communication driver 68. The control unit 60 outputs a control signal for the motor driver 65, a control signal for an LCD driving unit 66, a control signal for an LED driving unit 67 and a command signal for a car air conditioner 100 according to the tilting signals from the first and second detecting switches 23A and 23B and the rotational angle signals from the rotary encoder 18.

The CPU 61 is a calculating unit for calculating target values for the motor driver 65, the LCD driving unit 66 and the LED driving unit 67, or a command value for the car air conditioner 100, or control values for the whole control unit 60 according to the tilting signals from the first and second switches 23A and 23B and the rotational angle signals from the rotary encoder 18.

The ROM 62 is a read-only storage unit for storing an starting program for starting the air conditioning setting apparatus 1 in cooperation with the start of a vehicle engine and each program for outputting the control signal for the motor driver 65, the control signal for the LCD driving unit 66, the control signal for the LED driving unit 67 and the command signal for the car air conditioner 100. Also, in the starting program, the setting state of the temperature can be changed.

A program for controlling the LED driving unit 67 sets the red LED 35A and the blue LED 35B to emit light in a state in which the setting state of temperature can be changed (hereinafter referred to as temperature setting mode), and sets only the green LED 35C only to emit light in a state in which the setting state of air volume can be changed (hereinafter referred to as air volume setting mode), and sets all of the red LED 35A, the blue LED 35B and the green LED 35C to emit light in a state in which the setting state of air outlets can be changed (hereinafter referred to as air outlet setting mode) .

A program for controlling the motor 8 is set to output a control signal to the motor driver 65 to change the torque supplied to the operating part 6 instantaneously when the operating part 6 rotates by a predetermined angular degree in the temperature setting mode, and when the operating part 6 rotates by a predetermined angular degree different from the above predetermined angular degree in the air volume setting mode, and when the operating part 6 rotates by a predetermined angular degree different from both the above-mentioned angular degrees in the air outlet setting mode. That is, the control unit 60 controls the motor 8 to supply a predetermined torque to the operating part 6 according to the rotational angle detected by the rotary encoder 18.

In addition, the program for controlling the motor 8 is set to output a control signal to the motor driver 65 so as to calculate the rotational speed of the operating part 6 from a change in the rotational angle detected by the rotary encoder 18 and to supply the operating part 6 with such a large torque having a magnitude opposite to the direction of the rotational speed and preset for the rotational speed to the operating part 6. That is, the control unit 60 functions as a resistance control unit that controls the motor 8 so as to calculate the rotational speed of the operating part 6 from the change in the rotational angle detected by the rotary encoder 18 and to supply a predetermined resistance force to the operating part 8 according to the rotational speed.

The RAM 63 is a storage unit for temporarily storing values during the calculating processing of the CPU 61.

The EEPROM 64 is a storage unit capable of changing the stored contents, in which target values for the LCD driving unit 66 corresponding to each setting state of air volume, temperature and air outlets, target values for the LED driving unit 67 and a command value for the car air conditioner 100 etc are stored.

### <2> Operation of Air Conditioning Setting Apparatus 1

Hereinafter, the operation of the air conditioning setting apparatus will be described.

### <2.1> In Starting of Air Conditioning Setting Apparatus 1

The air conditioning setting apparatus 1 is started in cooperation with the starting of a vehicle engine, and the control unit 60 gets into the temperature setting mode. In this case, the control unit 60 outputs to the LCD driving unit 66 of the display device 30 and the LED driving unit 67 of the lighting device 35 control signals indicating that the present mode is the temperature setting mode, and the previous set temperature was, for example, 22°C, and the previously set air outlet was set to the VENT air outlet.

The display device 30 that operates based on the control signal displays on the temperature display area 41 of the LCD 31 a number 22 indicating that the previously set temperature is 22°C by the number forming unit 41A. Also, the display device 30 displays on the air volume display area 40 that the air volume is zero by making only the fan-shaped segment 40A emit light. Also, the display device 30 displays on the air outlet area 42 that the previously set air outlet is the VENT air outlet by making the arrow-shaped segment 42C emit light.

In addition, the display device 30 makes the ring-shaped segment 44 and the triangular segments 47 and 48 around the temperature display area 41 emit light, and keeps the ring-shaped segment 43 and the triangular segment 46 around the air volume display area 40 and the ring-shaped segment 45 and the triangular segment 49 around the air outlet display area 42 turned off. That is, the ring-shaped segment 44 displays that the present mode is the temperature setting mode, and the triangular segments 47 and 48 display that the present mode can be switched to the air volume setting mode or the air outlet setting mode by tilting the operating part 6 to the left or to the right.

The lighting device 35 that operates based on the control signal makes the red LED 35A and the blue LED 35B emit light. Therefore the illuminated light to the LCD 31, that is, the backlight turns violet.

### <2.2> In Temperature Setting

The temperature setting is performed by rotatingly operating the operating part 6 in the temperature setting mode.

When the operating part 6 is operated to rotate to the right, the rotary encoder 18 detects the increasing rotational angle of the operating part 6 and outputs a rotational angle signal corresponding to the detected rotational angle to the control unit 60. The control unit 60 computes the rotational angle signal as a setting changing signal that instructs the change in the set temperature, and calculates a target value for the LCD driving unit 66, a target value for the LED driving unit 67 and a target value for the motor driver 65 based on the increase in the rotational angle, and outputs control signals corresponding to these target values to the LCD driving unit 66, the LED driving unit 67 and the motor driver 65, respectively.

Then, the display device 30 increases the value of the number on the temperature display area 41 formed by the number forming unit 41A whenever the rotational angle of the operating part 6 increases by a predetermined angular degree. That is, whenever the rotational angle of the operating part 6 increases by a predetermined angular degree, the display device 30 displays the setting temperature increased by 1°C.

In addition, whenever the rotational angle of the operating part 6 increases by a predetermined angular degree, the lighting device 35 increases the brightness of the light emitted by the red LED 35A and decreases the brightness of the light emitted by the blue LED 35B. Thereby, the intensity of the red light gets stronger in the violet backlight as the rotational angle of the operating part 6 increases by a predetermined angular degree, and finally, the color of the backlight turns red when the number forming unit 41A forms the number '30' that is the upper limit of the set temperature. That is, the color of the backlight approaches red as the set temperature increases.

In addition, the motor 8 changes the torque instantaneously whenever the rotational angle of the operating part 6 increases by a predetermined angular degree. When the torque is changed instantaneously, a click sense is generated in the operating part 6. That is, the operator can feel a click sense whenever the set temperature increases by 1°C.

In addition, when the number forming unit 41A forms the number '30' on the temperature display area 41, the motor generates a large torque that counteracts the right-handed operation. This stops the operator from operating to rotate the operating part 6 to the right. That is, the stopping (haptic feedback) of the right-handed operation of the operating part 6 let the operator know that the set temperature became 30°C, the upper limit.

When the operating part 6 is operated to rotate to the left, the rotary encoder 18 detects the decreasing rotational angle of the operating part 6 and outputs a setting changing signal corresponding to the detected rotational angle to the control unit 60. The control unit 60 computes the rotational angle signal as a setting changing signal that instructs the change in the set temperature, and calculates a target value for the LCD driving unit 66, a target value for the LED driving unit 67 and a target value for the motor driver 65 based on the increase in the rotational angle, and outputs control signals corresponding to these target values to the LCD driving unit 66, the LED driving unit 67 and the motor driver 65, respectively.

Then, the display device 30 decreases the value of the number on the temperature display area 41 formed by the number forming unit 41A whenever the rotational angle of the operating part 6 decreases by a predetermined angular degree. That is, whenever the rotational angle of the operating part 6 decreases by a predetermined angular degree, the display device 30 displays the set temperature decreased by 1°C.

In addition, whenever the rotational angle of the operating part 6 decreases by a predetermined angular degree, the lighting device 35 decreases the brightness of the light emitted by the red LED 35A and increases the brightness of the light emitted by the blue LED 35B. Thereby, the intensity of the blue light gets stronger in the violet backlight as the rotational angle of the operating part 6 decreases by a predetermined angular degree, and finally the color of the backlight turns blue when the number forming unit 41A forms a number '16' indicating the lower limit (16°C) of the set temperature. That is, the color of the backlight approaches blue as the set temperature decreases.

In addition, the motor 8 changes the torque instantaneously whenever the rotational angle of the operating part 6 decreases by a predetermined angular degree. When the torque is changed instantaneously, a click sense is generated in the operating part 6. That is, the operator can feel a click sense whenever the set temperature decreases by 1°C.

In addition, when the number forming unit 41A forms the number '16' on the temperature display area 41, the motor 8 generates a large torque that counteracts the right-handed operation. This stops the operator from operating to rotate the operating part 6 to the left. That is, the stopping (haptic feedback) of the right-handed operation of the operating part 6 let the operator know that the set temperature became 16°C, the lower limit.

When the rotary encoder 18 detects no change in the rotational angle for two seconds, the control unit 60 determines that the change in the set temperature is finished, and calculates a command value for the car air conditioner 100 corresponding to the set temperature from the difference between the rotational angle detected by the rotary encoder 18 when the mode was switched to the temperature setting mode and the rotational angle detected by the rotary encoder 18 when the change in the set temperature is finished. Then, the communication driver 86 outputs a command signal corresponding to the calculated command value to the car air conditioner 100.

### <2.3> In Air Volume Setting

In the temperature setting mode, the air volume setting is performed by tilting the operating part 6 to the left to switch the mode to the air volume setting mode and then by rotatingly operating the operating part 6.

When the operating part 6 is operated to tilt to the left, the first operating piece 24A pushes a driving member 123A to turn the first detecting switch 23A on. Then, the first detecting switch 23A outputs a left tilting signal indicating that the operating part 6 is tilted to the left to the control unit 60. Also, when an operating force to the operating part 6 is removed and the driving member 123A returns to the original position so as to turn the first detecting switch 23A off, the first detecting switch 23A stops outputting the left tilting signal to the control unit 60.

The control unit 60 computes the output of the left tilting signal from the first detecting switch 23A in the temperature setting mode as a switching signal that instructs the switching from the temperature setting mode to the air volume setting mode, and switches the mode to the air volume setting mode, and outputs control signals corresponding to the air volume setting mode to the LCD driving unit 66 of the display device 30 and the LED driving unit 67 of the lighting device 35.

The display device 30 that operates based on the control signals displays on the air volume display area 40 that the air volume is zero by making only the fan-shaped segment 40A emit light, in the same way as in the temperature setting mode. Also, the number forming unit 41A displays a number '20' indicating the temperature set as above on the temperature display area 41. In addition, the fact that the air outlet is set to the VENT air outlet is displayed with the light-emission of the arrow-shaped segment 42A on the air outlet display area 42 in the same way as in the above temperature setting mode.

In addition, the display device 30 makes the ring-shaped segment 43 and the triangular segment 46 around the air volume display area 40 emit light and, at the same time, make the ring-shape segment 44 and the triangular segments 47 and 48 around the temperature display area 41 turned off. That is, the ring-shaped segment 43 displays that the present mode is the air volume setting mode, and the triangular segment 46 displays that the present mode can be switched to the temperature setting mode by the right tilting operation of the operating part 6.

In addition, the lighting device 35 that operates based on the control signals makes only the green LED 35C emit light. This makes the backlight color of the LCD 31 turn green.

When the operating part 6 is operated to rotate to the right, the rotary encoder 18 detects the increasing rotational angle of the operating part 6 and outputs a rotational angle signal corresponding to the detected rotational angle to the control unit 60. The control unit 60 computes the rotational angle signal as a setting changing signal instructing the change in the set air volume, and calculates a target value for the LCD driving unit 66, a target value for the LED driving unit 67 and a target value for the motor driver 65 based on the increase in the rotational angle, and outputs control signals corresponding to the respective target values to the LCD driving unit 66, the LED driving unit 67 and the motor driver 65, respectively.

Therefore, whenever the rotational angle of the operating part 6 increases by a predetermined angular degree different from the predetermined angular degrees in the air volume setting mode and in the air outlet setting mode described later, the display device 30 makes the circular-arc segments 40B to 40G emit light in order of 40B, 40C, 40D, 40E, 40F, and 40G in the air volume display area 40. That is, whenever the rotational angle of the operating part 6 increases by a predetermined angular degree, the increasing number of the light-emitting circular-arc segment displays that the set air volume has been increased.

In addition, whenever the rotational angle of the operating part 6 increases by the predetermined angular degree different from the above, the lighting device 35 increases the brightness of the light emitted by the green LED 35C. Therefore, whenever the rotational angle of the operating part 6 increases by the predetermined angular degree, the green backlight turns deep-green, and when the circular-arc segment 40G emits light in the air volume display area 40, that is, when the maximum air volume is set, the green backlight turns the deepest-green. That is, the green backlight becomes deeper as the set air volume becomes larger.

In addition, the motor 8 changes the torque instantaneously whenever the rotational angle of the operating part 6 increases by the predetermined angular degree different from above. When the torque is changed instantaneously, a click sense is generated in the operating part 6. That is, the operator can feel the click sense whenever the set air volume is increased by one level.

In addition, when the air volume display area 40 displays the maximum air volume by making all the circular-arc segments 40B to 40G emit light, the motor 8 generates a large torque that counteracts the right-handed operation. This stops the operator from operating to rotate the operating part 6 to the right. That is, the stopping (haptic feedback) of the right-handed operation of the operating part 6 let the operator know that the set air volume became the maximum value.

When the operating part 6 is operated to rotate to the left, the rotary encoder 18 detects the decreasing rotational angle of the operating part 6 and outputs a rotational angle signal corresponding to the detected rotational angle to the control unit 60. The control unit 60 computes the rotational angle signal as a setting changing signal instructing the change in the set air volume, and calculates a target value for the LCD driving unit 66, a target value for the LED driving unit 67 and a target value for the motor driver 65 based on the decrease in the rotational angle, and outputs control signals corresponding to the respective target values to the LCD driving unit 66, the LED driving unit 67 and the motor driver 65.

Therefore, when the operating part 6 begins to be operated to rotate to the left, for example, when all the circular-arc segments 40D to 40G emit light, as the rotational angle of the operating part 6 decreases by the predetermined angular degree different from the.above, the display device 30 turns off the circular-arc segments 40B to 40G in order of 40G, 40F, 40E, 40D, 40C, and 40B. That is, whenever the rotational angle of the operating part 6 decreases by the predetermined angular degree, the decreasing number of the light-emitting circular-arc segments displays that the set air volume has been decreased.

In addition, whenever the rotational angle of the operating part 6 decreases by the predetermined angular degree different from above, the lighting device 35 decreases the brightness of the light emitted by the green LED 35C. Therefore, whenever the rotational angle of the operating part 6 decreases by the predetermined angular degree different from above, the green backlight turns light-green, and when only the fan-shaped segment 40A emits light to display that the air volume is zero, the green backlight turns the lightest-green. That is, the green backlight becomes lighter as the set air volume becomes smaller.

In addition, the motor 8 changes the torque instantaneously whenever the rotational angle of the operating part 6 decreases by the predetermined angular degree different from the above. When the torque is changed instantaneously, a click sense is generated in the operating part 6. That is, the operator can feel the click sense whenever the set air volume is decreased by one level.

In addition, when the air volume display area 40 displays that the air volume is zero, the motor 8 generates a large torque that counteracts the left-handed operation. This stops the operator from operating to rotate the operating part 6 to the left. That is, the stopping of the left-handed operation of the operating part 6 let the operator know that the set air volume is zero.

When the rotary encoder 18 detects no change in the rotational angle for two seconds, the control unit 60 determines that the change in the set temperature is finished, and calculates a command value for the car air conditioner 100 corresponding to the set air volume from the difference between the rotational angle detected by the rotary encoder 18 when the mode was switched to the air volume setting mode and the rotational angle detected by the rotary encoder 18 when the change in the set air volume is finished. Then, the communication driver 86 outputs a command signal corresponding to the calculated command value to the car air conditioner 100.

When the communication driver 68 finishes the output of the command signal, the control unit 60 computes to switch the present mode to the temperature setting mode, and then the present mode returns to the temperature setting mode.

### <2.4> In Air Outlet Setting

In the temperature setting mode, the air outlet setting is performed by tilting the operating part 6 to the right to switch the present mode to the air outlet setting mode, and then by rotatingly operating the operating part 6.

When the operating part 6 is tilted to the right, the second operating piece 24B pushes the driving member 123B to turn the second detecting switch 23B on. Then, the second detecting switch 23B outputs a right tilting signal indicating that the operating part 6 is tilted to the right to the control unit 60. Also, when an operating force to the operating part 6 is removed, and the driving member 123B returns to the original position so as to turn the second detecting switch 23B off, the second detecting switch 23B stops outputting the right tilting signal to the control unit 60.

The control unit 60 computes the output of the right tilting signal from the second detecting switch 23B in the temperature setting mode as a switching signal that instructs the switching from the temperature setting mode to the air outlet setting mode, and switches the mode to the air volume setting mode, and outputs control signals corresponding to the air volume setting mode to the LCD driving unit 66 of the display device 30 and the LED driving unit 67 of the lighting device 35.

The display device 30 that operates based on the control signals displays on the air outlet display area 42 that the air outlet is set to the VENT air outlet by making the arrow-shaped segment 42C emit light, in the same as in the temperature setting mode. Also, the number forming unit 41A displays a number '20' indicating the temperature set above on the temperature display area 41. In addition, the air volume set above is displayed with the number of the light-emitting circular-arc segments among the circular-arc segments 40B to 40G in the air volume display area 40.

In addition, the display device 30 makes the ring-shaped segment 45 and the triangular segment 49 around the air outlet display area 42 emit light and, at the same time, turns off the ring-shaped segment 44 and the triangular segments 47 and 48 around the temperature display area 41. That is, the ring-shaped segment 45 displays that the present mode is the air outlet setting mode, and the triangular segment 49 displays that the present mode can be switched to the temperature setting mode by tilting the operating part 6 to the left.

In addition, the lighting device 35 that operates based on the control signals makes all the red LED 35A, the blue LED 35B and the green LED 35C emit light. Therefore, the backlight color turns white.

When the operating part 6 is rotatingly operated, the rotary encoder 18 detects the changing rotational angle of the operating part 6 and outputs a rotational angle signal corresponding to the detected rotational angle to the control unit 60. The control unit 60 computes the rotational angle signal as a setting changing signal instructing the change in the set air outlet, and calculates a target value for the LCD driving unit 66, a target value for the LED driving unit 67 and a target value for the motor driver 65 according to the change in the rotational angle, and outputs control signals corresponding to the respective target values to the LCD driving unit 66, the LED driving unit 67 and the motor driver 65.

Thereby, the display device 30 makes one of the arrow-shaped segments 42B to 42D in the air outlet display area 42 emit light according to the rotational angle of the operating part 6. That is, whenever the rotational angle of the operating part 6 increases by a predetermined angular degree different from the predetermined angular degrees in the temperature setting mode and in the air volume setting mode, the light-emitting arrow-shaped segment is switched from 42C (only the VENT air outlet) to 42D (only the FLOOR air outlet), 42B (only the DEF air outlet), a combination of 42B and 42D (the DEF air outlet and the FLOOR air outlet) and a combination of 42C and 42D (the VENT air outlet and the FLOOR air outlet) in turn. Contrary to the above, whenever the rotational angle of the operating part 6 decreases by a predetermined angular degree, the light-emitting arrow-shaped segments are switched from 42C (only the VENT air outlet) to a combination of 42C and 42D (the VENT air outlet and the FLOOR air outlet), a combination of 42B and 42D (the DEF air outlet and the FLOOR air outlet), 42B (only the DEF air outlet) and 42D (only the FLOOR air outlet) in turn.

In addition, the motor 8 changes the torque instantaneously whenever the rotational angle of the operating part 6 changes by the predetermined angular degree different from the above. When the torque is changed instantaneously, a click sense is generated in the operating part 6. That is, the operator can feel the click sense when the light-emitting arrow-shaped segment is changed to 42C (only the VENT air outlet), 42D (only the FLOOR air outlet), 42B (only the DEF air outlet), a combination of 42B and 42D (the DEF air outlet and the FLOOR air outlet) and a combination of 42C and 42D (the VENT air outlet and the FLOOR air outlet) in turn.

When the rotary decoder 18 detects no change in the rotational angle for two seconds, the control unit 60 determines that the change in the set air outlet is finished, and calculates an command value for the car air conditioner 100 corresponding to the set air outlet from the difference between the rotational angle detected by the rotary encoder 18 when the mode was switched to the air outlet setting mode and the rotational angle detected by the rotary encoder 18 when the change in the set air outlet is finished. Then, the communication driver 86 outputs a command signal corresponding to the calculated command value to the car air conditioner 100.

When the communication driver 68 finishes the output of the command signal, the control unit 60 computes to switch the present mode to the temperature setting mode, and then the present mode returns to the temperature setting mode.

In addition, in the air outlet setting mode, the color and the brightness of the backlight do not change. Also, the motor 8 does not stop the rotational operation of the operating part 6.

### <2.5> Applying Resistance Force to Operating Part 6

In each of the temperature setting, the air volume setting and the air outlet setting, the control unit 60 calculates the rotational speed of the operating part 6 from the change in the rotational angle detected by the rotary encoder 18 and outputs a control signal to the motor driver 65 to apply such a large torque having a magnitude opposite to the direction of the rotational speed and preset for the rotational speed. Therefore, the resistance force applied to the operating part 6 increases with the increase in the rotational speed of the operating part 6 and decreases with the decrease in the rotational speed of the operating part 6.

When the movable part 14 slides on the front cover 12 with the rotation of the operating part 6, the grease 5 generates a viscous resistance between the movable part 14 and the front cover 12, and then a resistance force is applied to the operating part 6. Since the resistance force results from the viscosity, it increases as the rotational speed of the movable part 14, that is, the rotational speed of the operating part 6 increases. That is, the resistance force applied to the operating part becomes larger as the rotational speed of the operating part changes more rapidly, for example, when the operating part begins to rotate rapidly, or when the rotating operation of the operating part 6 reverses suddenly, or when the rotational speed of the operating part increases suddenly.

The control of the resistance force applied to the operating part 6 is delayed due to (1) the transmission time of rotation from the operating part 6 to the rotary encoder 18, (2) the response time of the rotary encoder 18, (3) the calculation time of the control unit 60, (4) the response time of the motor 8 and (5) the transmission time of rotation from the motor 8 to the operating part 6. While the control of the resistance force is delayed, as described above, the viscous resistance of the grease 50 applies a resistance force corresponding to the change in the rotational speed the operating part 6.

In addition, a frictional force is generated between the O-ring 17 and the front end 14B of the movable part 14, and the frictional force becomes the resistance force against the rotation of the movable part 14. That is, the O-ring also applies a resistance force to the operating part 6.

### <3> Effect of Present Embodiment

According to the present embodiment, the following effects can be obtained.

In the embodiment, it is possible to a resistance force corresponding to the change in the rotational speed apply to an operating part 6 with a viscous resistance generated by the grease 50 between the movable part 14 and the front cover 12 while the control of the resistance force applied to the operating part 6 is delayed. Therefore, it is possible to diminish the effect that the control delay of the resistance force applied to the operating part 6 has on the resistance sense of the operating part 6 right after the rotational speed changes. As a result, the operating quality can be improved.

In addition, in the embodiment, the movable part 14 has a cylindrical portion 14A disposed concentrically with the center of rotation of the operating part 6, and the front cover 12 is disposed concentrically with the center of rotation of the operating part 6 and has a cylindrical portion 12A which comes into sliding contact with the cylindrical portion 14A of the movable part 14. Therefore, the circumferential wall of the cylindrical portion 14A that is farthest from the center of rotation of the movable part 14 can be made the portion of movable part 14 which can slide on the front cover 12. That is, when the movable part 14 rotates with the operating part 6, it's the circumferential wall of the cylindrical portion 14A that has a largest moving speed among the portions forming the movable part 14 can be made the portion of the movable part 14 which comes into sliding contact with the front cover 12. Therefore the viscous resistance can be generated effectively.

In addition, in the embodiment, an O-ring is provided between the front end 14B of the movable part 14 and the front end 12B of the front cover 12. Therefore, the grease 50 can be prevented from moving in an improper direction, that is, toward a planetary gear mechanism 9, and a resistance force can be applied to the operating part 6.

In addition, in the embodiment, a power supply unit 7 includes the planetary gear mechanism 9 for increasing the torque outputted by the motor 8 and transmitting it to the operating part 6. Therefore, a small motor 8 can be mounted on the power supply unit 7 because the motor 8 is not required to output a large torque.

In addition, in the embodiment, the movable part 14 and the front cover 12 are provided between the operating part 6 and the planetary gear mechanism 9. Therefore, the backlash of the operating part 6 due to the interposition of the planetary gear mechanism 9 can be suppressed by the viscous substance 50. As a result, the operating quality can be prevented from being degraded due to the interposition of the planetary gear mechanism 9.

In addition, in the embodiment, the planetary gear mechanism 9 is disposed between the motor 8 and the operating part 6. However, the invention is not limited thereto. If the power supply unit 7 is not required to be small, the output shaft of the motor 8 may be fixed to the operating part 6 with no planetary gear mechanism 9 attached. In this case, the operating part 6 and the movable part 14 may be formed integrally.

In addition, in the embodiment, the cylindrical portion 14A of the movable part 14 is disposed at the outer circumferential surface of the cylindrical portion 12A of the front cover 12. However, the invention is not limited thereto. The cylindrical portion 14A of the movable part 14 may be disposed at the inner circumferential surface of the cylindrical portion 12A of the front cover 12. In addition, the front end 14B of the movable part 14 and the front end 12B of the front cover 12 may be allowed to be flat to interpose a viscous substance therebetween to generate a viscous resistance.

As described above, according to an aspect of the invention, it is possible to diminish the effect that the control delay of the resistance force applied to the operating part has on the resistance sense of the operating part right after a change in the rotational speed. As a result, the operating quality can be improved.

## Claims

1. A haptic feedback input device (5) comprising:
an operating part (6) that is rotatingly operated;
a power supply unit (7) that can supply power generated by a prime mover (8) to the operating part (6) ;
a rotational angle detecting unit (18) that detects the rotational angle of the operating part (6);
a control unit (60) that controls the prime mover (8) to apply a predetermined torque to the operating part (6) according to the rotational angle;
a resistance control unit that controls the prime mover (8) to apply a predetermined resistance force to the operating part (6) according to the rotational speed;
a movable part (14) and a sliding contact part that slide on each other with the rotation of the operating part (6) ;
**characterised in that** the haptic feedback input device also comprises a viscous substance that is filled between the movable part (14) and the sliding contact part and generates a viscous resistance between the movable part (14) and the sliding contact part.

2. The haptic feedback input device according to claim 1,
wherein the movable part (14) has a cylindrical portion (14a) disposed concentrically with the center of rotation of the operating part (6), and the sliding contact part has a cylindrical portion (12a) disposed concentrically with the center of rotation of the operating part (6) to come into sliding contact with the cylindrical portion (14a) of the movable part (14).

3. The haptic feedback input device according to claim 1 or 2,
wherein an O-ring (17) is provided between the movable part (14) and the sliding contact part.

4. The haptic feedback input device according to any of claims 1 to 3,
wherein the power supply unit (7) has a power transmitting mechanism disposed between the prime mover (8) and the operating part (6) to transmit the power, and the movable part (14) is disposed between the operating part (6) and the power transmission mechanism.

## Patentansprüche

1. Eingabeeinrichtung (5) mit haptischer Rückkopplung, aufweisend:
einen Betätigungsteil (6), der rotationsmäßige betätigbar ist;
eine Leistungslieferungseinheit (7), die durch einen Antriebsmotor (8) erzeugte Leistung an den Betätigungsteil (6) liefern kann;
eine Drehwinkel-Detektionseinheit (18), die den Drehwinkel des Betätigungsteils (6) detektiert;
eine Steuereinheit (60), die den Antriebsmotor (8) zum Aufbringen eines vorbestimmten Drehmoments auf den Betätigungsteil (6) in Abhängigkeit von dem Drehwinkel steuert;
eine Widerstandssteuereinheit, die den Antriebsmotor (8) zum Aufbringen einer vorbestimmten Widerstandskraft auf den Betätigungsteil (6) in Abhängigkeit von der Rotationsgeschwindigkeit steuert;
einen beweglichen Teil (14) und einen Gleitkontaktteil, die bei Rotation der Betätigungsteils (6) eine Gleitbewegung relativ zueinander ausführen,
**dadurch gekennzeichnet,**
**dass** die Eingabeeinrichtung mit haptischer Rückkopplung ferner eine viskose Substanz aufweist, die zwischen dem beweglichen Teil (14) und dem Gleitkontaktteil eingefüllt ist und einen Viskositäts-Widerstand zwischen dem beweglichen Teil (14) und dem Gleitkontaktteil erzeugt.

2. Eingabeeinrichtung mit haptischer Rückkopplung nach Anspruch 1
wobei der bewegliche Teil (14) einen zylindrischen Bereich (14a) aufweist, der konzentrisch mit dem Rotationszentrum des Betätigungsteils 6 angeordnet ist, und der Gleitkontaktteil einen zylindrischen Bereich (12a) aufweist, der konzentrisch mit dem Rotationszentrum des Betätigungsteils (6) angeordnet ist, um mit dem zylindrischen Bereich (14a) des beweglichen Teils (14) in Gleitkontakt zu treten.

3. Eingabeeinrichtung mit haptischer Rückkopplung nach Anspruch 1 oder 2,
wobei ein O-Ring (17) zwischen dem beweglichen Teil (14) und dem Gleitkontaktteil vorgesehen ist.

4. Eingabeeinrichtung mit haptischer Rückkopplung nach einem der Ansprüche 1 bis 3,
wobei die Leistungslieferungseinheit (7) einen Leistungsübertragungsmechanismus aufweist, der zum Übertragen der Leistung zwischen dem Antriebsmotor (8) und dem Betätigungsteil (6) angeordnet ist, und wobei der bewegliche Teil (14) zwischen dem Betätigungsteil (6) und dem Leistungsübertragungsmechanismus angeordnet ist.

## Revendications

1. Dispositif d'entrée à retour haptique (5), comprenant :
une partie fonctionnelle (6) qui est actionnée de façon rotative ;
une unité d'alimentation (7) qui peut délivrer à la partie fonctionnelle (6) de l'énergie générée par un entraînement (8) ;
une unité de détection d'angle de rotation (18), qui détecte l'angle de rotation de la partie fonctionnelle (6) ;
une unité de contrôle (60) qui contrôle l'entraînement (8) pour appliquer un couple prédéterminé à la partie fonctionnelle (6) en fonction de l'angle de rotation ;
une unité de contrôle de résistance qui contrôle l'entraînement (8) pour appliquer une force de résistance prédéterminée à la partie fonctionnelle (6) en fonction de la vitesse de rotation ;
une partie mobile (14) et une partie de contact coulissante qui coulissent l'une sur l'autre avec la rotation de la partie fonctionnelle (6) ;
**caractérisé en ce que** le dispositif d'entrée à retour haptique comprend également
une substance visqueuse remplie entre la partie mobile (14) et la partie de contact coulissante et génèrant une résistance visqueuse entre la partie mobile (14) et la partie de contact coulissante.

2. Dispositif d'entrée à retour haptique selon la revendication 1,
dans lequel la partie mobile (14) comporte une portion cylindrique (14a) disposée de manière concentrique avec le centre de rotation de la partie fonctionnelle (6), et la partie de contact coulissante comporte une portion cylindrique (12a) disposée de manière concentrique avec le centre de rotation de la partie fonctionnelle (6) pour venir en contact de manière coulissante avec la portion cylindrique (14a) de la partie mobile (14).

3. Dispositif d'entrée à retour haptique selon la revendication 1 ou 2,
dans lequel un joint torique (17) est prévu entre la partie mobile (14) et la partie de contact coulissante.

4. Dispositif d'entrée à retour haptique selon l'une quelconque des revendications 1 à 3,
dans lequel l'unité d'alimentation (7) comporte un mécanisme de transmission d'énergie disposé entre l'entraînement (8) et la partie fonctionnelle (6) pour transmettre l'énergie, et la partie mobile (14) est disposée entre la partie fonctionnelle (6) et le mécanisme de transmission d'énergie.
